Europäisches Patentamt

European Patent Office

Office européen des brevets

(11) Publication number: **0 201 838**
A2

# (12) EUROPEAN PATENT APPLICATION

(21) Application number: 86106138.0

(22) Date of filing: 05.05.86

(51) Int. Cl.⁴: **G 09 G 3/36**

(30) Priority: 10.05.85 JP 99816/85

(43) Date of publication of application:
20.11.86 Bulletin 86/47

(84) Designated Contracting States:
DE FR GB

(71) Applicant: Matsushita Electric Industrial Co., Ltd.
1006, Oaza Kadoma
Kadoma-shi Osaka-fu, 571(JP)

(72) Inventor: Nemoto, Yukio
1310-4, Osiso Oosio-machi
Naka-gun Kanagawa Pref. 255(JP)

(72) Inventor: Takahashi, Koushiro
380-56, Watauchi
Fujisawa City, 251(JP)

(72) Inventor: Hosono, Masaki
9-21, Honkugenuma 4-chome
Fujisawa City, 251(JP)

(72) Inventor: Kitahara, Hiroshi
83-5, Kagawa
Chigasaki City, 253(JP)

(74) Representative: Kirschner, Klaus Dieter et al,
Patentanwälte Kirschner & Grosse
Herzog-Wilhelm-Strasse 17
D-8000 München 2(DE)

(54) Driving circuit for liquid crystal display.

(57) A liquid crystal display has generally plural liquid crystal cells which are constituted as matrix, and each cells have respectively one transistor and supplied image signals by such transistors. A driving circuit for liquid crystal display of the present invention periodically transverses the polarity of voltage of the image signals and voltage between both terminal of the liquid crystal cell, and so as to switching the transistor, the driving circuit generates gate signals impressed on gate electrode of the transistor, having lowest voltage lower than a voltage subtracted the voltage of amplitude of common electrode from the lowest voltage in the image signals.

FIG. 5

EP 0 201 838 A2

TITLE OF THE INVENTION

Driving circuit for liquid crystal display

BACKGROUND OF THE INVENTION

1. FIELD OF THE INVENTION

The present invention relates to a driving circuit for liquid crystal display, and especially a drving circuit for liquid crystal display used for LCD television set,or the like.

2. DESCRIPTION OF THE PRIOR ART

An active matrix type liquid crystal display is recently put in practical use for color television set, or the like, which has thin film transistors on every liquid crystal cells as picture elements so as to realize high quality indication. At the same time, lowering of driving voltage and consumption of electric power of a driving circuit for the liquid crystal display are attached by great importance.

A conventional driving circuit for liquid crystal display is described in the following by referring to FIG.1 FIG.2 FIG.3 and FIG.4 (a) to FIG.4 (j).

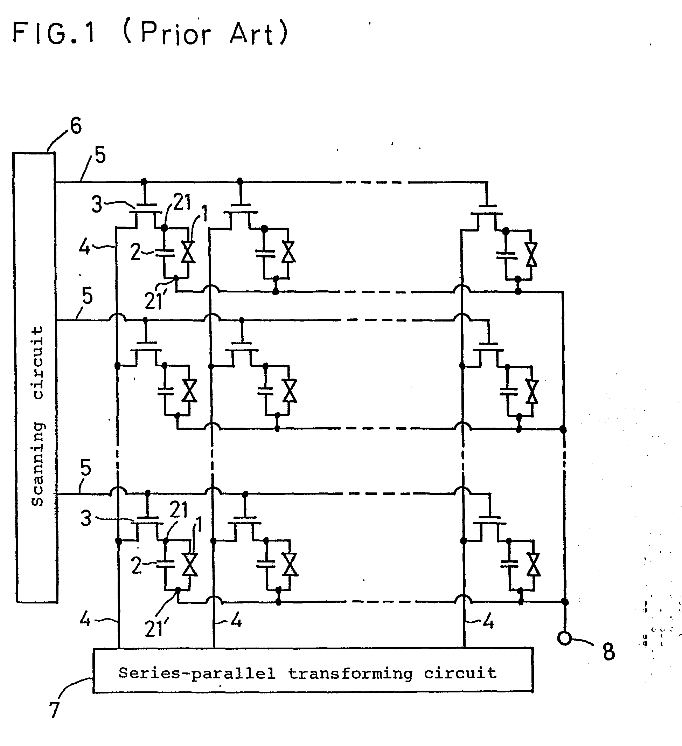

FIG.1 shows a constitution of a generally used matrix type liquid crystal display. In FIG.1 a picture element is constituted by three kinds of components, namely liquid crystal cell 1, a capacitor for memorizing 2 and thin film transistor 3 (hereinafter abbreviated as TFT). Vertical lines 4 and horizontal lines 5 are respectively corresponding to X-electrodes and Y-electrodes of X-Y matrix. Each horizontal lines 5 are connected to a scanning circuit 6, and each vertical lines 4 are connected to a series-parallel transforming circuit 7 which transforms serial image signals of horizontal scanning to number of X-electrodes parallel image signals of certain number of X-electrodes by sampling and holding the image signals. And also the vertical lines 4 and horizontal lines 5 are connected to a common electrode 8.

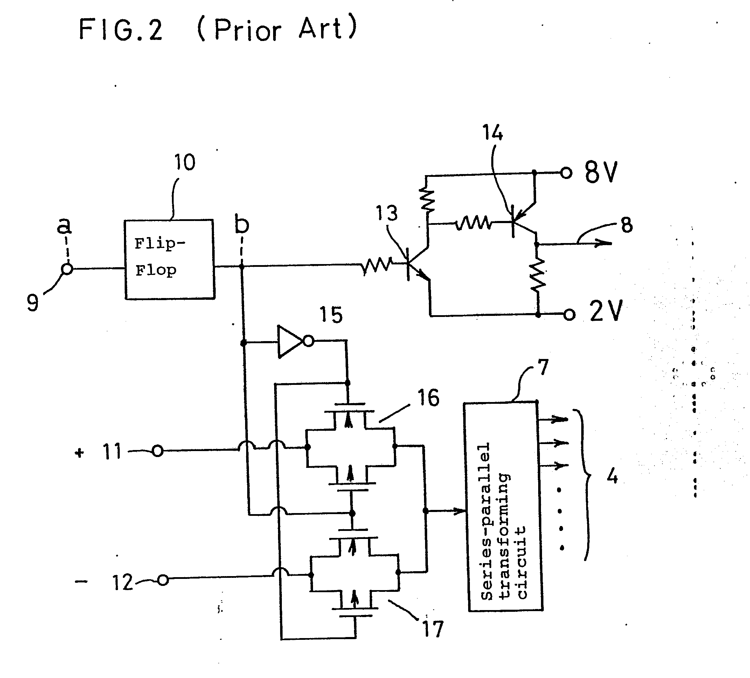

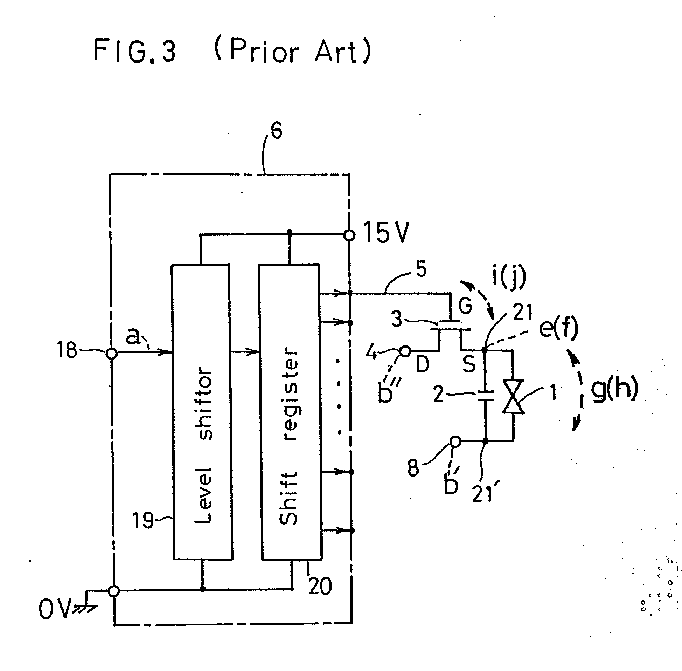

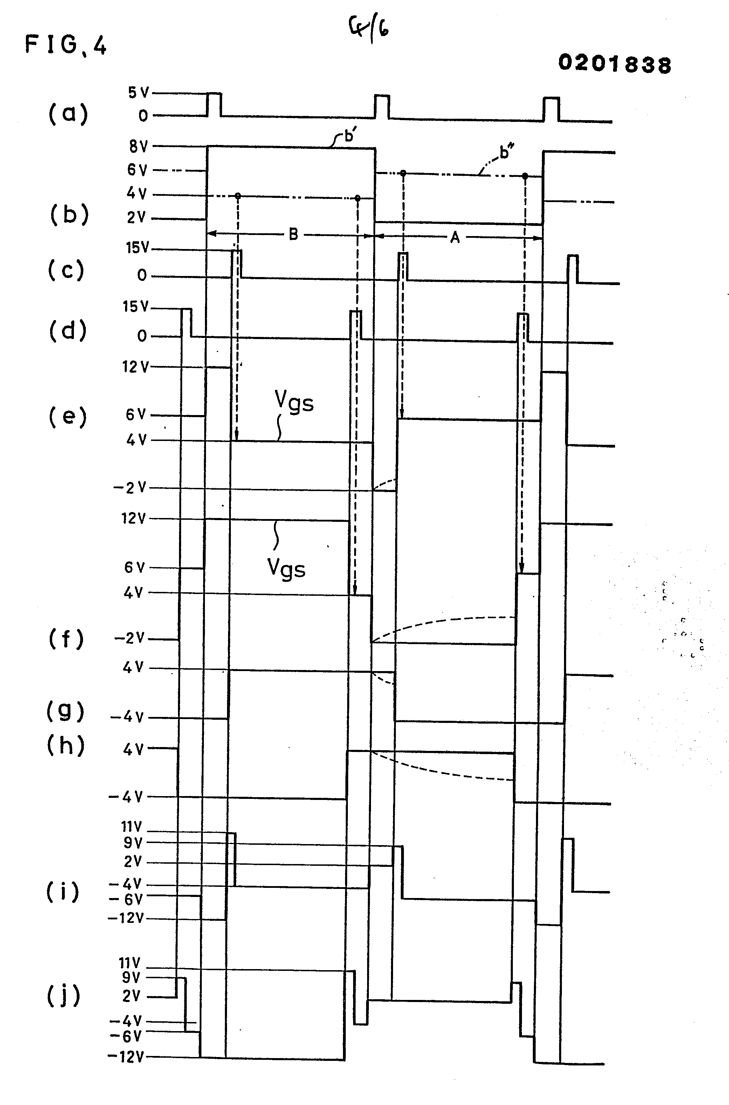

FIG.2 shows a conventional driving circuit for X-electrodes and common electrode, FIG.3 shows a conventional driving circuit for Y-electrodes and FIG.4 (a), FIG.4 (b), FIG.4 (c), FIG.4 (d), FIG.4 (e), FIG.4 (f), FIG.4 (g), FIG.4 (h), FIG.4 (i), and FIG.4 (j) show waveforms of correspondingly alphabetized points in FIG.2 and FIG.3.

In FIG.2, when a start pulse for scanning shown in FIG.4 (a) is supplied to a terminal 9, output signal of flip-flop 10 turns over from "0" to "1" or turns over from "1" to "0". And terminals 11 and 12 are respectively supplied with image signals having reversed polarity each other. In time period -A- of FIG.4 (b) wherein the output of the flip-flop 10 is "0", a transistor 13 takes off state and a transistor 14 also takes off state. Accordingly collector voltage of the transistor 14 becomes 2V as shown by line -b- in FIG.4 (b), and at the same time a voltage supplied to the common electrode 8 becomes 2 V.

Analogue switch 16 is turned on by reception of "0" output of the flip-flop 10 and "1" output of inverter 15, and image signals issued to the terminal 11 (which is 6 V as shown by two-dotted chain line b) in FIG.4 (b) are supplied to the series-parallel transforming circuit 7.

Next, in a time period -B- of FIG.4 (b) wherein the output of the flip-flop is "1", the transistors 13 and 14 are turned on, and the supplied voltage of the common electrode 8 becomes 8 V as shown real line -b- in FIG.4 (b).

Analogue switch 17 is turned on by "1" output of the flip-flop 10 and "0" output of the inverter 15, and image signals impressed on the terminal 12 (which is 4 V as shown by two dotted chain line -b- in FIG.4 (b)) are supplied to the series-parallel transforming circuit 7.

The series-parallel transforming circuit 7 is for sampling and holding the series of supplied image signals of each picture elements as they are and then transforming to parallel signals.  And such transformed signals are supplied on each X-electrodes 4.

In the conventional driving circuit for liquid crystal display constituted as above-mentioned, the voltages of the common electrode and X-electrodes together repeat the turning-over in synchronism to the start pulse for scanning.

In FIG.3, when the above-mentioned start pulse

3

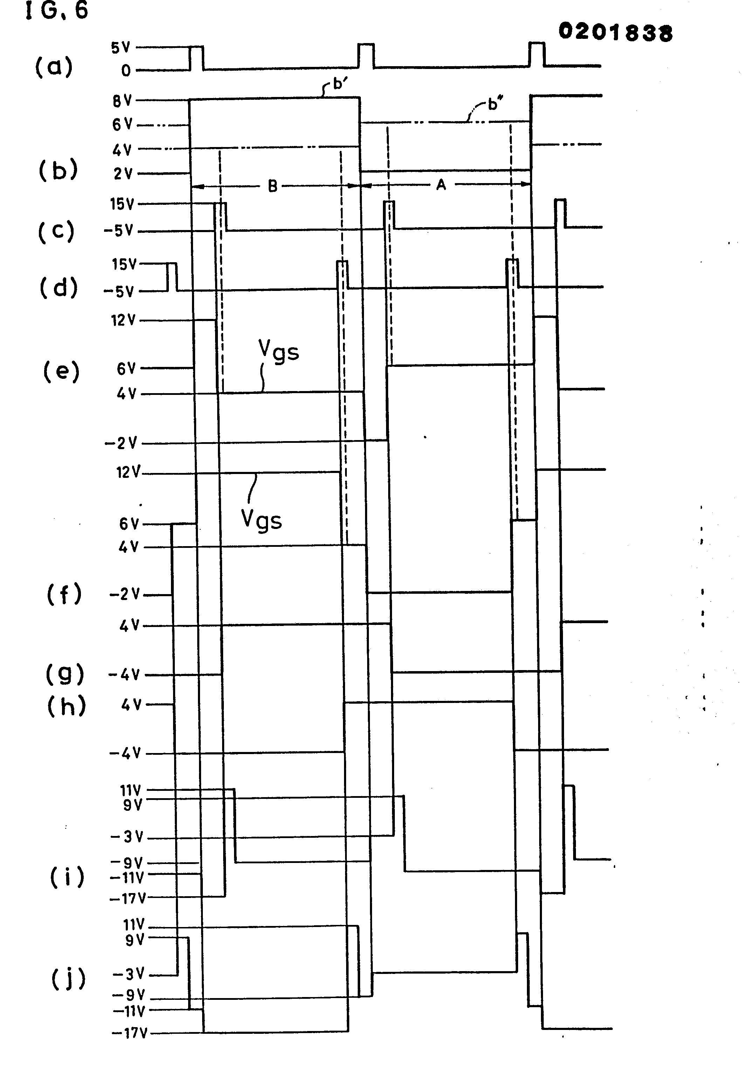

for scanning (which is shown in FIG.6 (a) is supplied on a terminal 18 of the scanning circuit 6, voltage of the pulse is amplified from a level of 0--5 V to a level of 0-- 15 V by level shifter 19, and the amplified pulse is supplied to a shift register 20. By recieving such amplified pulse, the shift register 20 starts a shift action, and generates pulses for scanning Y-electrodes 5 serially from top line to bottom line. FIG.4 (C) shows voltage of the top line of the Y-electrodes 5, and FIG.4 (d) shows voltage of the bottom line of the Y-electrodes 5. Such voltages of Y-electrodes is corresponding to voltages of gate signals of TFT (thin film transistor) 3. As shown in FIG.1 and FIG.3, the Y-electrodes are respectively connected to the gate electrodes of TFT 3, the X-electrodes are respectively connected to the drain electrodes of TFT 3 and each of one terminal 21 of the liquid crystal cell 1 and the capacitor for memorizing 2 are respectively connected to the source electrodes of the TFT 3. Furthermore, the common electrode 8 is connected to each of other terminals of the liquid crystal cell 1 and the capacitors for memorizing 2. The drain electrodes and source electrodes are named as above-mentioned for the convenience of description.

Elucidation is made in detail on the voltages which are impressed on the liquid crystal cell 1 by referring to FIG.4 (a) to FIG.4 (j). FIG.4 (a) shows the start pulse which is impressed on the input terminals 9, and is start-up signal of scanning and truning-over of polarity (as such signal is used vertical synchronization signal separated from image signal is used), and the waveform shown by real line -b- in FIG.4 (b) shows the voltage impressed on the common electrode 8, and the waveform shown by two dotted chain line -b- in FIG.4 (b) shows the voltage of image signal impressed on the drain electrode of TFT 3, which shows the case of constant luminance signal in one vertical scanning period.

FIG.4 (c) shows the gate voltage impressed on the gate electrode of the TFT 3 on the top line, and FIG.4 (d) shows the gate voltage impressed on the gate electrode of the TFT 3 on the bottom line. By such gate voltage, all of the TFTs 3, 3 ... are switched on and off. FIG.4 (e) shows the source voltage of TFT 3 on the top line which is impressed on one terminal 21 of the liquid crystal cell 1 and the capacitor 2. During the time period -B- in FIG.4 (b), when the gate voltage of TFT 3 on the top line becomes 15 V (shown in FIG.4(c)) and TFT 3 turns on, the voltage of the terminal 21 of the liquid crystal cell 1 becomes 4 V, equal to the voltage of image signals -b-, and such voltage is maintained by the capacitor 2 inspite of turning off of TFT 3. After that, when the voltage of one terminal 21 of the liquid crystal cell 1, which is connected to the common electrode 8, is decreased

5

by 6 V by the turning-over of polarity, the voltage of
another terminal 21' of the liquid crystal cell 1 is also
decreased by 6 V by the action of the capacitor 2, and as
a result the voltage becomes -2 V.

Next, during the time period -A- in FIG.4 (b),
when the gate voltage of TFT 3 on the top line becomes 15
V (shown in FIG.4 (c)) and TFT 3 turns on, the voltage of
the terminal 21 of the liquid crystal cell 1 becomes 6 V
shown as -b"-, and such voltage is maintained even after
turning off of TFT 3.  After that, when the voltage of one
terminal 21 of the liquid crystal cell 1 is increased by 6
V, the voltage of the other terminal 21' of the liquid
crystal cell 1 is also increased by 6 V, and as a result
the voltage becomes 12 V.  Such actions are repeated.
Accordingly, the voltage impressed across both terminals
of the liquid crystal cells 1 on the top line become
corresponding to a voltage of waveform shown in FIG.4 (g)
which is given by subtracting the voltage -e- shown in FIG.4
(e) from the voltage -b- shown in FIG.4 (b).

Namely, whenever TFT 3 turns on, the polarity of
impressed voltages turns over.  FIG.4 (f) shows the source
voltage of TFT 3 on 'the bottom line which is corresponding
to the voltage of the terminal 21 of the liquid crystal
cell 1, and when TFT 3 on the bottom line is turned on by
the gate voltage shown in FIG.4 (d), the voltage of the
image signal -b- in FIG.4 (b) is supplied on the liquid

6

crystal cell 1. Another actions are the same as described in FIG.4 (e), and the voltage impressed on both terminals of the liquid crystal cell 1 on the bottom line corresponds to a voltage of waveform shown in FIG.4 (h) which is given by subtracting the voltage f in FIG.4 (f) from the voltage -b- shown in FIG.4 (b).

Furthermore, a waveform shown in FIG.4 (i) shows the voltage Vgs between the gate and the source of FIG.3 on the top line, which is given by subtracting the voltage shown in FIG.4 (e) from the voltage shown in FIG.4 (c). And a waveform shown in FIG.4 (j) shows the voltage Vgs between the gate and the source of TFT 3 on the bottom line, which is given by subtracting the voltage shown in FIG.4 (f) from the voltage shown in FIG.4 (d).

The voltage of image signal maintained by the capacitor for memorizing 2 is, however, discharged with CR time current determined by the capacitance of the memory capacitor 2 and resistance of TFT 3 when TFT 3 is off. Since the capacitance of this memory capacitor 2 is so small as 1 pF, the current ratio of ON vs OFF of TFT 3 of about $10^6$ is needed for maintaining the voltage of image signals nearly constant value during one scanning period to correspond to the repetition period of the gate voltage of transistor 14 in FIG.2. This is shown in FIG.4 (c) and (d). On the other hand, a cut-off voltage of TFT 3 which is needed to make TFT 3 turn of is Vgs = -3V. If

7

Vgs is higher than such voltage of -3V, it is impossible to maintain the voltage of image signals constant because electric current flows to TFT 3 and time current for discharging becomes smaller.

Accordingly, in the above-mentioned case, when Vgs on the top line shown in FIG.4 (i) becomes 2V, the electric current flows to TFT 3 and change of voltage as shown by dotted line in FIG.4 (e) occurs in the source voltage. As a result, voltage drop shown by dotted line in FIG.4 (g) occurs in the voltage impressed across both terminals of the liquid crystal cell 1 on the top line, and the luminance level in such part also changes. Similarly, when Vgs on the bottom line shown in FIG.4 (j) becomes 2V, the electric current flows to TFT 3 too, and voltage change as shown by dotted line in FIG.4 (f) occurs in the source voltage. As a result, voltage drop shown by dotted line in FIG.4 (h) occurs in the voltage impressed across both terminals of the liquid crystall cell 1 on the bottom line, and the luminance level in such part also changes.

As mentioned above, by comparing the waveforms shown in FIG.4 (g) and (h), it is known that the voltage drop of luminance level on the bottom part lines is larger than that of the top lines, because of longer time period of electric current flowing to TFT 3. As a result, the conventional driving circuit for liquid crystal display has a shortcoming of inclination of luminance from upper part to lower part of display.

SUMMARY OF THE INVENTION

In view of the above-mentioned shortcoming, the purpose of the present invention is to provide an improved driving circuit for liquid crystal display without inclination of luminance from upper part to lower part.

A driving circuit for liquid crystal display comprises:

voltage changing means for reversing polarity of voltage impressed on common electrodes of resspective liquid crystal cells,

polarity reversing means for reversing polarity of driving voltage, which corresponds to image signals to be impressed on the liquid crystal cells, synchronously with the voltage reversing of the voltage changing means,

plural transistors each connected by its source electrodes to one terminal of respective liquid crystal cells, by its drain electrode to the other terminal of respective liquid crystal cells, and by its gate to receive respective gate signal, and

gate voltage generating means for generating the gate signals each having lowest voltage which is lower than a voltage made by subtracting the amplitude voltage of the common electrode from the lowest voltage in the image signals.

9

BRIEF DESCRIPTION OF THE DRAWINGS

FIG.1 is the circuit diagram showing the generally used active-matrix type liquid crystal display.

FIG.2 is the circuit diagram showing the conventional driving circuit for X-electrodes and the common electrode of the liquid crystal display.

FIG.3 is the circuit diagram showing the conventional driving circuit for Y-electrode of liquid crystal display.

FIG.4 (a), FIG.4 (b), FIG.4 (c), FIG.4 (d), FIG.4 (e), FIG.4 (f), FIG.4 (g), FIG.4 (h), FIG.4 (i), and FIG.4 (j) are the time charts showing waveforms on various points of the driving circuits shown in FIG.2 and FIG.3.

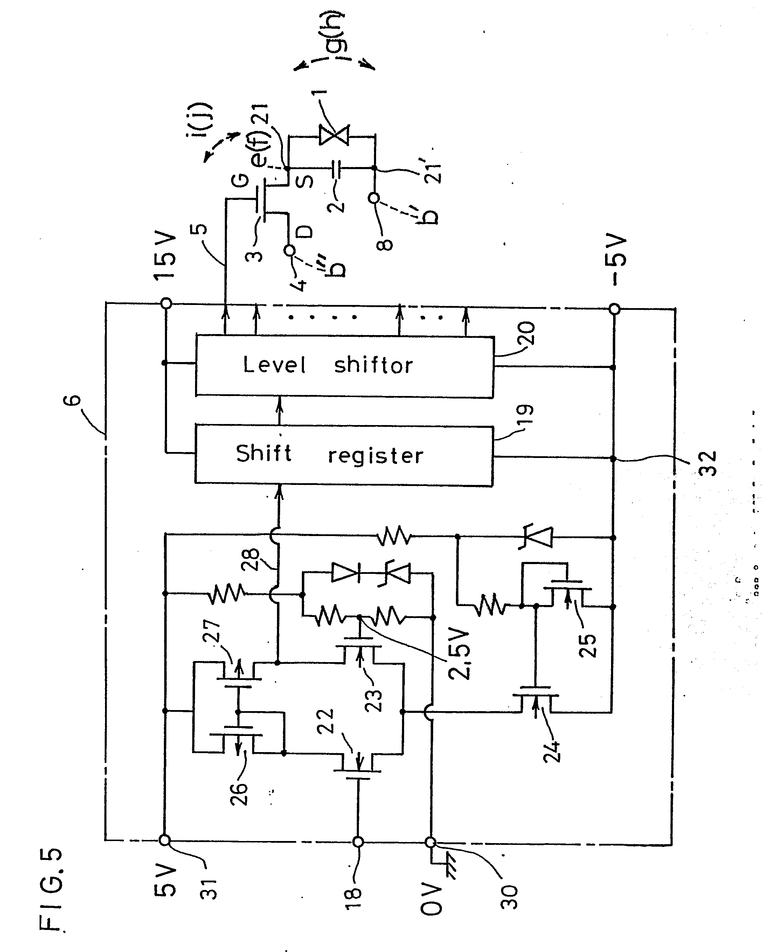

FIG.5 is a circuit diagram showing a driving circuit for liquid crystal display in accordance with the present invention.

FIG.6 (a), FIG.6 (b), FIG.6 (c), FIG.6 (d), FIG.6 (e), FIG.6 (f), FIG.6 (g), FIG.6 (h), FIG.6 (i), and FIG.6 (j) are time charts showing waveforms on various points of the driving circuit shown in FIG.5.

DETAILED DESCRIPTION OF THE PREFERRED EMBODIMENT

A preferred embodiment of the driving circuit for liquid crystal display in accordance with the present invention is described in following referring to FIG.5, FIG.6 (a), FIG.6 (b), FIG.6 (c), FIG.6 (d), FIG.6 (e), FIG.6 (f), FIG.6 (g), FIG.6 (h), FIG.6 (i) and FIG.6 (j).

10

FIG.5 shows an embodiment of a driving circuit for liquid crystal display in accordance with the present invention, especially of a gate voltage generating circuit for driving Y-electrodes of the liquid crystal display.

In FIG.5, transistors 22, 23, 24, 25, 26 and 27 constitute a voltage shifting circuit for changing voltage range 0--5 V between points 30 and 31 to -5--5V between point 32 and line 28. A level shifter 19 is a circuit for shifting voltage range from -5--5 V to -5--15 V. A shift register 20 is circuit for consecutively generating voltages of gate signals changing from a lowest voltage of -5 V to a highest voltage of 15 V, and such gate signals are consecutively applied to the Y-electrodes of the liquid crystal display in a manner like as scanning as shown in FIG.1.

The driving circuit for Y-electrodes of the liquid crystal display is constituted as mentioned above. Details of constitution and action are described in the following.

At first, a start pulse (0--5 V) mentioned above (shown in FIG.6 (a)) is supplied to terminal 18. N-channel MOS FETs (Metal Oxide Semiconductor Field Effect Transistor) 22 and 23 are constituted as a differential amplifier, gate electrode of MOS FET 22 is connected to terminal 18, and gate electrode of MOS FET 23 is supplied with a reference voltage of 2.5 V. A MOS FET 24 serves as

11

current source which flows electric current to the differential amplifier, and a MOS FET 25 is connected to a MOS FET 24 for constituting a current mirror. Sources of MOS FETs 24 and 25 are connected to a terminal which is impressed with a voltage of 5 V. P-channel MOS FETs 26 and 27 constitute a current mirror type load circuit.

When a start pulse "a" of 5 V shown in FIG.6 (a) is supplied on the terminal 18, the MOS TET 22 turns on, the MOS FET 23 turns off, MOS FETs 26 and 27 turn on and voltage of output line 28 becomes 5V. And also, when the voltage of 0 V is supplied on the terminal 18, the MOS FET 22 turns off, the MOS FET 23 turns on, the MOS FETs 26 and 27 turn off, and the voltage of output line 28 becomes −5V. As mentioned above, the voltage in a region from 0 to 5 V is supplied on the terminal 18 and the voltage of a region from −5 to 5 V is outputted on the output line 28. As voltage regions of power source of the level shifter 19 and shift register 20 are set to a voltage of from −5 to 15 V, in the range of from −5 to 5 V of output voltage on the output line 28 is amplified as −5 to 15 V by a level shifter 19, and the shift register 20 generates voltages for gate signals in a manner to scan the Y-electrodes 5 (in FIG.5 Y-electrodes abbreviated as only one, but really they are constituted matrix as shown in FIG.1) from top to bottom.

FIG.6 (a) to FIG.6 (j) are waveforms showing the

12

voltage changes on the several point of the driving circuit and the liquid crystal display. FIG.6 (a) shows the start pulse which is impressed on the input terminals 18, and is as start-up signal of scanning and truning over of polarity (as such signal vertical synchronization signal separated from image signal issued), and the wavefarm shown by real line -b- in FIG.6 (b) shows the voltage impressed on the common electrode 8, and the waveform shown by two dotted chain line -b- in FIG.6 (b) shows the voltage of image signal impressed on the drain electrode of TFT 3, which shows the case of constant luminance signal in one vertical scanning period. FIG.6 (c) shows the gate voltage impressed on the gate electrode of the TFT 3 on the bottom line. By such gate voltage, all of the TFTs 3, 3 ... are switched on and off. FIG.6 (e) shows the source voltage of TFT 3 on the top line which is impressed on one terminal 21 of the liquid crystal cell 1 and the capacitor 2. During the time period -B- in FIG.6 (b), when the gate voltage of TFT 3 on the top line becomes 15 V (shown in FIG.6 (c)) and TFT 3 turns on, the voltage of the terminal 21 of the liquid crystal cell 1 becomes 4 V, equal to the voltage of image signals -b-, and such voltage is maintained by the capacitor 2 inspite of turning off of TFT 3. After that, when the voltage of one terminal 21 of the liquid crystal cell 1, which is connected to the common electrode 8, is decreased

13

6 V by the turning-over of polarity, the voltage of another terminal 21' of the liquid crystal cell 1 is also decreased 6 V by the action of the capacitor 2, and as a result the voltage becomes -2 V.

Next, during the time period -A- in FIG.6 (b), when the gate voltage of TFT 3 on the top line becomes 15 V (shown in FIG.6 (c)) and TFT 3 turns on, the voltage of the terminal 21 of the liquid crystal cell 1 becomes 6 V shown as -b"-, and such voltage is maintained inspite of turning off of TFT 3. After that, when the voltage of one terminal 21 of the liquid crystal cell 1 is increased by 6 V, the voltage of the other terminal 21 of the liquid crystal cell 1 is also increased 6 V, and as a result the voltage becomes 12 V. Such actions are repeated. Accordingly, the voltage impressed across both terminals of the liquid crystal cell 1 on the top line becomes corresponding to a voltage of waveform shown in FIG.6 (g) which is given by substracting the voltage -e- shown in FIG.6 (e) from the voltage -b- shown in FIG.6 (b). Namely, whenever TFT 3 turns on, the polarity of impressed voltages turns over. FIG.6 (f) shows the source voltage of TFT 3 on the bottom line which is corresponding to the voltage of the terminal 21 of the liquid crystal cell 1, and when TFT 3 on the bottom line is turned on by the gate voltage shown in FIG.6 (d), the voltage of the uisual signal -b- in FIG.6 (b) is supplied on the liquid crystal

14

cell 1. Another actions are the same as described in FIG.6 (e), and the voltage impressed on both terminals of the liquid crystal cell 1 on the bottom line is corresponds to a voltage of waveform shown in FIG.6(h) which is given by subtracting the voltage f in FIG.6 (f) from the voltage -b- shown in FIG.6 (b).

Furthermore, a waveform shown in FIG.6 (i) shows the voltage Vgs between the gate and the source of FIG.5 on the top line, which is given by subtracted the voltage shown in FIG.6 (e) from the voltage shown in FIG.6 (c). And a waveform shown in FIG.6 (j) shows a voltage subtracted the voltage shown in FIG.6 (f) from the voltage shown in FIG.6 (d), which is the voltage Vgs between the gate and the source of TFT 3 on the bottom line. Hereupon, noteworthy points are that, when the gate voltage shown in FIG.6 (c) and (d) are at lowest voltage, Vgs shown in FIG.6 (i) and FIG.6 (j) are below -3 V, by which the cutoff voltage of TFT 3 in FIG.1 is maintained. Accordingly, the source voltage shown in FIG.6 (e) and FIG.6 (f) do not change, and the voltage impressed across both terminals of the liquid crystal cell 1 also do not change. Therefore, the inclination of luminance from upper part to lower part of the display does not occure.

As mentioned above, such embodiment of driving circuit for liquid crystal display in accordance with the present invention has gate voltage generating apparatus

15

for generating gate voltage having lowest voltage lower than a voltage which is made by subtracting the voltage amplitude of the common electrode from the lowest voltage in the image signals. Therefore, even if the source voltage is decreased at reversing of the voltage of common electrode, the change of voltage supplied across both terminals of the liquid crystal cell and the inclination of luminance of the display can be eliminated, by an impressing of such lowest voltage of the gate signals as to assure cut-off state of the TFT 3.

In such embodiment, the lowest voltage of the gate voltage is set negative. But, if the lowest voltage of the gate voltage fulfil such condition as beinglower than a voltage made by subtracting amplitude voltage of the common electrode from the lowest voltage in the image signals, the similar operation is obtainable only by raising the voltages of the image signals and commom electrode instead of lowering the lowest voltage of the gate voltage. Nevertheless, the aforementioned lowering of the lowest voltage of the gate voltage is superior in the point of view of the low voltage and low electric power consumption.

WHAT IS CLAIMED IS

1.        A driving circuit for liquid crystal display comprising:

voltage changing means for reversing polarity of voltage impressed on common electrodes of respective liquid crystal cells,

polarity reversing means for reversing polarity of driving voltage, which corresponds to image signals to be impressed on said liquid crystal cells, synchronously with said voltage reversing of said voltage changing means,

plural transistors each connected by its source electrodes to one terminal of respective liquid crystal cells, by its drain electrode to the other terminal of respective liquid crystal cells, and by its gate to receive respective gate signal, and

gate voltage generating means for generating said gate signals each having lowest voltage which is lower than a voltage made by subtracting said amplitude voltage of said common electrode from said lowest voltage in said image signals.

2.        A driving circuit for liquid crystal display in accordance with claim 1, wherein

said transistors are thin film transistor.

17

1/6

0201838

FIG.1 (Prior Art)

Scanning circuit

Series-parallel transforming circuit

FIG.2 (Prior Art)

FIG.3 (Prior Art)

FIG.4

0201838

FIG. 5

5/6

0201838

FIG. 6